# EUROPEAN PATENT APPLICATION

(11) **EP 0 795 863 A2**
(43) Date of publication of application: **17.09.1997**
(21) Application number: 97301588.6
(22) Date of filing: 11.03.1997
(51) Int. Cl.: G11B 20/12, G11B 27/031

(54) **Data recording method and apparatus**

(30) Priority: 11.03.1996 JP 53465/96; 15.03.1996 JP 59598/96
(71) Applicant: SONY CORPORATION, Tokyo (JP)
(72) Inventor: Katsumata, Yasushi, Shinagawa-ku, Tokyo (JP); Ohbayashi, Masayuki, Shinagawa-ku, Tokyo (JP)
(74) Representative: Nicholls, Michael John

(57) **Abstract**

The present invention proposes a data recording method and a data recording apparatus for recording a file data which makes it possible to positively recognize its source information of the information signal data regardless of what kind of recording medium the information signal data was recorded on and regardless of whether or not the information signal data has been transferred between different information recording mediums.

The present invention also proposes a data recording method in which interactive conversion can be selectively carried out between a file data which makes it possible to positively recognize its source information of the information signal data regardless of what kind of recording medium the information signal data is recorded on and regardless of whether or not the information signal data has been transferred between different information recording mediums, and a file data in which the source information data of the information signal data is provided separately from its relating information such as the format data and information signal data, and the thus converted file data can be recorded on a recording medium.

According to the above aspect of the present invention, interactive conversion is selectively carried out between a first type of file data which is composed of fundamental frames of a common header and a group of blocks, wherein the group of blocks include at least an information block, a format block and a data block, the information block is formed of an information block header and source information data of information signal data, the format block is formed of a format block header and format data, and the data block is formed of a data block header and the information signal data, and a second type of file data which is comprised of one file data portion composed of fundamental frames of a common header, a format block and data block, wherein the format block is formed of a format block header and format data and the data block is formed of a data block header and the information signal data, and also comprised of the other file data portion composed of fundamental frames of an information block header and source information data of the information signal data including a pointer indicative of a recording place on which the one file data portion is recorded, and the first or second type of file data obtained by the interactive conversion is recorded on a recording medium.

## Description

The present invention relates to a data recording method and a data recording apparatus, and more particularly to a method and apparatus for recording file data including information signal data such as audio signal data, video signal data, program data or the like.

For example, there has been known a professional use editing apparatus as an apparatus for carrying out signal processing on an audio signal and a video signal and editing the same in an electronic manner to convert the signals into digital data, and recording and reproducing the digital data in and from a digital equipment such as a hard disk or the like. Further, recently, a personal computer having a function of recording and reproducing an audio signal and a video signal is gradually spread.

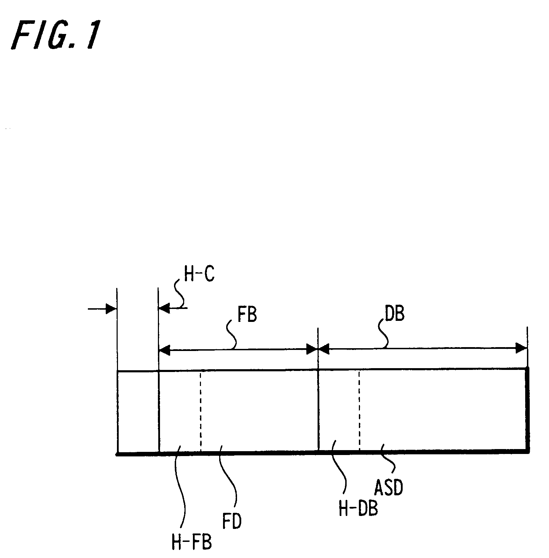

FIG. 1 shows a format for a file data to be recorded on a recording medium such as a magnetic tape, a magnetic disk, a hard disk (fixed magnetic disk), an optical disk, a magnetooptical disk or the like, based on a conventional data recording method for recording audio signal data by a personal computer.

This file data includes a common header H-C and a group of blocks as a frame fundamental unit. The group of blocks include a format block FB and a data block DB.

The data block DB is formed of a data block header H-DB and audio signal data ASD. A name of block type indicating that the block is a data block and a data size of the data block are written in the data block header H-DB.

A name of block type indicating that the block is a format block and a data size of the format block are written in the format block header H-FB. The format data FD includes data specification data of the audio signal such as sampling rate data, a word length data per one sample, a channel number data or the like.

A name of file type indicative of that the data is audio signal data file and a data size of the whole file are written in the common header H-C.

Audio signal data recorded on digital signal recording mediums such as commercially available an optical disk, a magnetooptical disk, a magnetic tape or the like has two attributes for each of music pieces, i.e., an audio signal specification (a sampling frequency, a word length per one sample data, a number of channels or the like) and source information for the audio signal data (a name of music piece, a name of artist, an identification number of the music piece, an album name in which the music pieces are included or the like).

However, according to the above-described format for the file data, although a specification of audio signal data is regulated, nothing is regulated for the source information of the audio signal data.

As described above, in a digital recording medium, a source information of an audio signal data necessarily corresponds to one audio signal data. This source information provides easy access for a user. Thus, if the source information of the audio signal data is coupled to a file of an audio signal data, the user can identify the file of the audio signal data with ease.

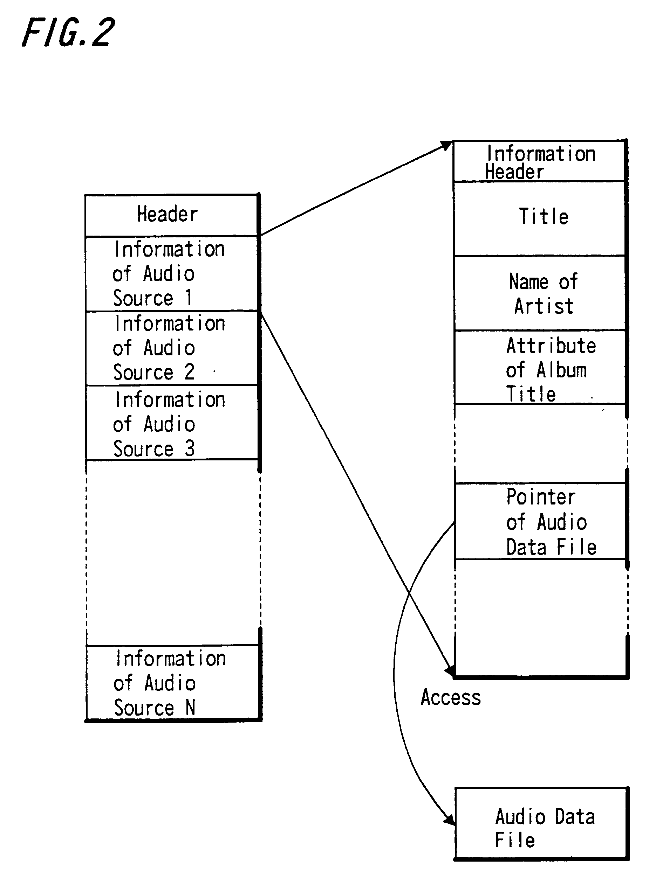

Next, a conventional method (tool) for coupling the source information of the audio signal data to the file of the audio signal data will be described with reference to FIG. 2. In this tool, the source information of the audio signal data is stored in an exclusively useful file independent of a file of the audio signal data. The source information of the audio signal data includes items such as a title, a name of artist; attribute of the album title and so on. In addition to these items, there is provided an item as a pointer for describing a position (address) within a memory at which there is the file of the corresponding audio signal data.

According to this tool, the user watches an item of the file of the audio signal data, e.g., a name of music piece or the like and selects a source information of a particular audio signal data, and then tells to the tool which item the user has selected. The tool recognizes a pointer which is written on a corresponding position and sends audio signal data recorded on the corresponding position (address) to an output unit. As a result, the audio signal data is reproduced. In this way, the source information of the audio signal data is coupled to the file of the audio signal data by means of the pointer.

In the conventional method (tool) for coupling the source information of the audio signal data to the file of the audio signal data, the pointer merely indicates a storing place of the digital recording medium on which an audio signal data file is recorded. Therefore, if a file of an audio signal data is transferred from a certain digital recording medium on which the file is recorded to another digital recording medium, then the association between the file of the audio signal data and the source information of the audio signal data is lost after the transfer. If the association between the file of the audio signal data and its source information is once lost, it becomes impossible at all to determine the source information to which a single file of an audio signal data has been coupled. By way of an example, if there is a cassette tape of which origin is unknown and a piece of music recorded thereon is one that has not been ever heard, it becomes impossible at all to identify the name of the music piece, its player and so on.

Therefore, it is a general object of the present invention to provide an improved data recording method and its apparatus in which the aforesaid shortcomings and disadvantages encountered with the prior art can be alleviated.

Embodiments of the present invention can provide a data recording method and a data recording apparatus for recording file data of information signal data on a recording medium, in which it is possible to positively recognize its source information of the information signal data regardless of what kind of recording medium the information signal data was recorded on and regardless of whether or not the information signal data has been transferred between different information recording mediums.

Embodiment of the present invention can provide a data recording method and a data recording apparatus for recording file data of information signal data on the recording medium, in which it is possible to positively recognize its source information of the information signal data and positively discriminate the information signal data from other information signal data regardless of what kind of recording medium the information signal data was recorded on and regardless of whether or not the information signal data has been transferred between different information recording mediums.

Embodiment of the present invention can provide a data recording method and a data recording apparatus in which interactive conversion can be selectively carried out between a file data which makes it possible to positively recognize its source information of the information signal data regardless of what kind of recording medium the information signal data was recorded on and regardless of whether or not the information signal data has been transferred between different information recording mediums, and a file data in which the source information data of the information signal data is provided separately from the format data and information signal data, and thereafter the interactively converted file data is recorded on a recording medium.

Embodiments of the present invention can provide a data recording method and a data recording apparatus in which interactive conversion can be selectively carried out between a file data which makes it possible to positively recognize its source information of the information signal data regardless of what kind of recording medium the information signal data is recorded on and regardless of whether or not the information signal data has been transferred between different information recording mediums, and a file data in which the source information data of the information signal data is provided separately from the format data and information signal data, and the file data can be recorded on a recording medium, and moreover, the information signal data can be positively discriminated from other information signal data.

According to an aspect of the present invention, there are provided a data recording method and data recording apparatus for recording a file data of frame fundamental units of a common header and a group of blocks on a recording medium, wherein the group of blocks includes at least an information block, a format block and a data block, the data block is formed of a data block header and information signal data, the format block is formed of a format block header and format data, and the information block is formed of an information block header and source information data of information signal data even if it is transferred between different recording media.

According to the above aspect of the present invention, the file data arranged by the above method or apparatus always maintains association between information signal data and source information of the information signal data.

According to another aspect of the present invention, there are provided a data recording method and a data recording apparatus in which interactive conversion is selectively carried out between a first type of file data which is composed of fundamental frames of a common header, an information block, a format block and a data block, wherein the information block is formed of an information block header and source information data of information signal data, the format block is formed of a format block header and format data, and the data block is formed of a data block header and the information signal data, and a second type of file data which is comprised of a first file data portion composed of fundamental frames of a common header, a format block and data block, wherein the format block is formed of a format block header and format data and the data block is formed of a data block header and the information signal data, and also comprised of a second file data portion composed of fundamental frames of an information block header and source information data of the information signal data including a pointer indicative of a recording place for the first file data portion, and the first or second type of file data obtained by the interactive conversion is recorded on a recording medium.

According to the another aspect of the present invention, the first type of file data and the second type of file data are selectively and interactively converted into each other, and the file data of the first or second type obtained by the interactive conversion is recorded on the recording medium, whereby the recording medium produced by the interactive conversion can be utilized by a recording and/or reproducing apparatus regardless of whichever types of file data the apparatus is exclusively useful for.

The above and other features, and advantages of the present invention will become apparent from the following detailed description of illustrative embodiments thereof to be read in conjunction with the accompanying drawings, in which like reference numerals are used to identifv the same or similar parts in the several views and in which:-
FIG. 1 is a schematic diagram showing a format of file data when the file data is recorded based on a conventional data recording method;
FIG. 2 is a schematic diagram useful for explaining a conventional arrangement of audio information file;
FIG. 3 is a schematic diagram showing an arrangement of file data used when data is recorded by a data recording method according to the present invention;
FIG. 4 is a schematic block diagram showing an arrangement of a computer useful for recording, reproducing, editing and the like of the file data;
FIGS. 5A and 5B are schematic diagrams showing an arrangement of a first type of file data and a second type of file data recorded by the file data recording method according to the present invention;
FIG. 6 is a schematic diagram showing an arrangement of source information data included in the second type of file data according to the present invention; and
FIG. 7 is a schematic diagram showing an arrangement of information signal data included in the second type of file data according to the present invention; and
FIGS. 8A and 8B are flowcharts showing a process for converting the first type of file data and the second type of file data into each other according to the present invention.

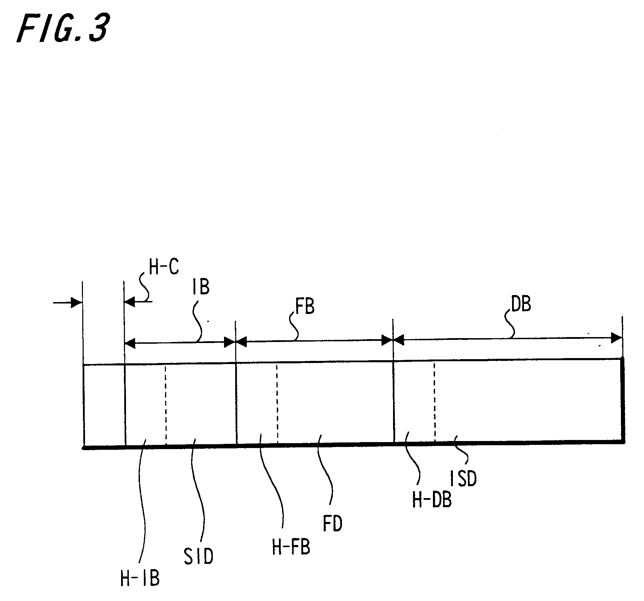

Embodiments of the present invention will hereinafter be described with reference to the attached drawings. FIG. 3 shows an arrangement of file data which are recorded on recording mediums such as a magnetic tape, a magnetic disk, a fixed magnetic disk (hard disk), an optical disk, a magnetooptical disk and so on according to the data recording method of the present invention.

The file data is based on a common header H-C and a group of blocks as a frame fundamental unit, and the group of blocks include at least an information block IB, a format block FB and a data block DB.

The data block DB is formed of a data block header H-DB and information signal data ISD. A name of block type indicative of the data block and a data size of the data block are written into the data block header H-DB. The information signal data ISD is any of the audio signal data, video signal data, program data and so on.

A name of block type indicative of the format block and a data size of the format block are written into the format block header H-FB. The format data FD includes data specification data of the information signal data such as sampling rate data, word length data per one sample data, channel number data and so on.

The information block IB is formed of an information block header H-IB and source information data SID of the information signal data. A name of program type indicating that the block is an information block and a data size of the information block are written in the information block header H-IB. The source information data SID of the information signal data includes at least characteristic identification data of the information signal data ISD.

A name of file type indicative of an audio signal data file, video signal data file or a program data file, and a data size of the entirety of the file are written into the common header H-C.

Next, the source information data SID of the information signal data ISD of the information block IB will further be described in detail. The source information data SID includes characteristic identification data of the information signal data. As the characteristic identification data, for example, the followings may be employed.

### [Characteristic identification data]

1. Code data indicative of an identification symbol to be given to information signal data as a copyrighted material or code data indicative of an identification symbol to be given to a set of a plurality of information signal data as copyrighted materials. This identification symbol is formed of a numeral, alphabet, a combination of a numeral and alphabet or the like.
2. The identification symbol of 1 is comprised of a nation identification symbol, a producer identification symbol, and an identification symbol of information signal data.
3. Code data indicative of an identification symbol and a track number of a recording medium on which information signal data is recorded or a recording medium duplicated from the recording medium.

In addition to the characteristic identification data of the information signal data ISD, the following can be employed as the source information data SID, for example.
1. Characteristic identification data of information signal data relating to the information signal data ISD of the data block DB. The characteristic identification data may be, for example, 1 to 3 or the like of the above characteristic identification data.
2. If the information signal data ISD is audio signal data, the following can be employed, for example.
   a) Code data indicative of a name of music piece or a title of the audio signal data or a general name of music piece or a general title of a plurality of audio signals including that audio signal data.
   b) Code data indicative of a name of one or a set of two or more of a composer, a songwriter, a conductor, a singer, a player, a producer, a seller or the like of the audio signal data.
   c) Text data (character data), still picture video signal data, moving picture video signal data, audio signal data and so on.
3. If the information signal data ISD is video signal data, for example, the following can be employed.
   a) Code data indicative of a title of the video signal data or a general title of a plurality of video signal data including the video signal data.
   b) Code data indicative of a name of one or a set of two or more of a director, a player, a composer, an original writer, a scenario writer, a producer, a seller or the like of the video signal data.
   c) Text data (character data), still picture video signal data, moving picture video signal data, audio signal data and so on.
4. If the information signal data ISD is program data, the following can be employed, for example.
   a) Code data indicative of a title of the program data or a general title of a plurality of program data including that program data.
   b) Code data indicative of a name of one or a set of two or more of a programmer, a designer, a composer, a producer, a seller or the like of the program data.

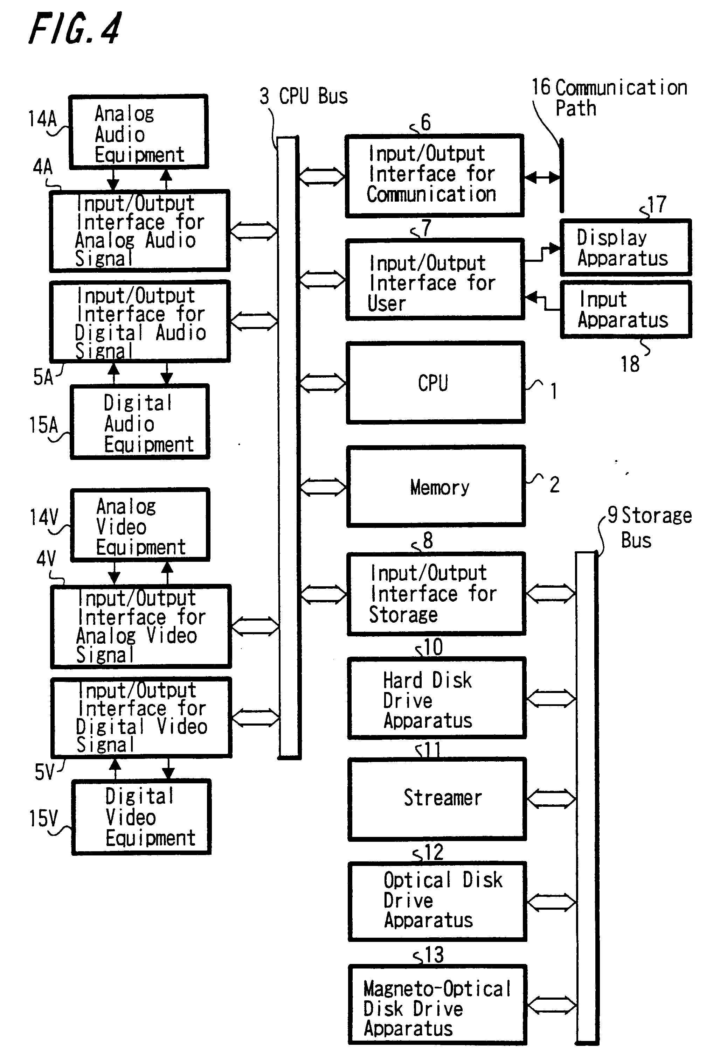

Next, description will be made on one example of a manner of recording the above-described file data when the information signal data is audio signal data and a video signal data, by way of an example of a computer (personal computer) of FIG. 4. First, an arrangement of the computer will be described. In the computer, there are provided a CPU (central processing unit) 1, a memory 2 of the CPU 1 (ROM and RAM) and a CPU bus 3. The following respective units including the memory 2 are connected through the CPU bus 3 to the CPU 1.

An input/output interface (including an A/D converter and a D/A converter) 4 for an analog audio signal (audio signal) is connected with an analog audio (audio) equipment 14A such as an analog audio tape recorder of a longitudinal direction track recording system for a magnetic tape and an analog audio tape recorder of a slant track recording system for a magnetic tape or the like. An input/output interface 5A for a digital audio signal (audio signal) is connected with a digital audio (audio) equipment 15A such as a digital audio (PCM) tape recorder of a longitudinal direction track recording system for a magnetic tape and a digital audio (PCM) tape recorder of a slant track recording system for a magnetic tape, an audio magnetic disk recording and reproducing apparatus, an audio optical disk reproducing apparatus, an audio magnetooptical disk recording and reproducing apparatus or the like.

An input/output interface (including an A/D converter and a D/A converter) 4 for an analog video signal (video signal) is connected with an analog video (video) equipment 14V such as an analog video tape recorder of a slant track recording system for a magnetic tape or the like. An input/output interface 5V for a digital video signal (video signal) is connected with a digital video (video) equipment 15V such as a digital video tape recorder of a slant track recording system for a magnetic tape, a magnetic disk recording and reproducing apparatus, a video optical disk (DVD: digital video disk) reproducing apparatus, a video magnetooptical disk recording and reproducing apparatus or the like.

An input/output interface 6 for communication is connected to a communication path 16 such as a telephone network or the like. By the way, the communication path 16 may be an optical fiber cable in addition to a wire cable. Further, the communication path 16 may be a wireless communication path employing a medium such as electric wave, light or the like. The communication path 16 is connected with any of a number of other computers (personal computer or the like).

An input/output interface 7 for a user (user) is connected with a display device 17 such as a CRT and LCD and an input device 18 such as a keyboard, a mouse or the like.

A storage input/output interface 8 is connected through a storage bus 9 to an external memory apparatus (external recording or/and reproducing apparatus) such as a hard disk (fixed magnetic disk) drive apparatus 10, a streamer (stream magnetic tape) drive apparatus (recording and reproducing apparatus) 11, an optical disk drive apparatus (reproducing apparatus) 12, a magnetooptical disk drive apparatus (recording and/or reproducing apparatus) 13 or the like.

The file data having an arrangement according to the present invention is recorded or reproduced by the above-described computer in the following manner.

The file data is composed of frame fundamental units of the common header and blocks such as the information block, the format block, the data block or the like wherein the data block is formed of a data block header and audio signal data, the format block is formed of a format block header and format data, and the information block is formed of an information block header and source information data of audio signal data. The file data is recorded on any of a master magnetic tape, a master disk of an optical disk, a master disk of a magnetooptical disk or the like. Each of the master magnetic tape, the master disk of the optical disk, the master disk of the magnetooptical disk or the like is useful for duplicating magnetic tapes, optical disks, magnetooptical disks or the like in a mass producing manner. The file data recorded on the duplicated recording mediums are reproduced by the digital audio equipment 15A. Then, the reproduced data are supplied to any one of the hard disk drive apparatus 10, the streamer 11, the optical disk drive apparatus 12, the magnetooptical disk drive apparatus 13 or the like and recorded on any one of a hard disk, a magnetic tape for a streamer, an optical disk, a magnetooptical disk or the like.

Even if the information signal data is video signal data, the recording and reproducing process is similarly carried out as follows.

That is, the file data is composed of the frame fundamental units of the common header and blocks such as the information block, the format block, the data block or the like wherein the data block is formed of the data block header and video signal data, the format block is formed of the format block header and format data and the information block is formed of the information block header and the source information data of video signal data. This file data is recorded on any one of the master magnetic tape, the master disk of the optical disk, the master disk of the magnetooptical disk or the like. Each of the master magnetic tape, the master disk of the optical disk, the master disk of the magnetooptical disk or the like is useful for duplicating magnetic tapes, optical disks, magnetooptical disks or the like in a mass producing manner. The file data recorded on the duplicated recording mediums are reproduced by the digital video equipment 15V. Then, the reproduced data are supplied to any one of the hard disk drive apparatus 10, the streamer 11, the optical disk drive apparatus 12, the magnetooptical disk drive apparatus 13 or the like and recorded on any of the hard disk, the magnetic tape for the streamer, the optical disk, the magnetooptical disk or the like. The video signal data includes audio signal data.

The analog audio signal (analog video signal) recorded in the analog audio equipment 14A (analog video equipment 14V) may be subjected to A/D conversion by the input/output interface 4A for the analog audio signal (input/output interface 4V for an analog video signal), and then subjected to signal processing and electronic editing processing by the CPU 1. In this manner, conversion is made to produce file data which is composed of the frame fundamental units of the common header and the blocks such as the information block, the format block, the data block or the like, wherein the data block is formed of the data block header and audio signal data (video signal data), the format block is formed of the format block header and format data and the information block is formed of an information block header and source information data of the audio signal data (video signal data). Thus, the file data can be recorded in the digital audio equipment 15A (digital video equipment 15V).

The data recording method of the first aspect of the present invention can record the file data which is composed of the fundamental frames of the common header and the group of blocks, wherein the group of blocks includes at least the information block, the format block and the data block, in which the data block is formed of the data block header and the information signal data, the format block is formed of the format block header and format data, and the information block is formed of the information block header and source information data of information signal data. Therefore, it is possible to positively recognize the source information of the information signal data regardless of whichever recording medium the information signal data was recorded on and whether or not the information signal data has been transferred between different information recording mediums.

According to the data recording method of the second aspect of the present invention, in the data recording method of the first aspect of the present invention, the source information data includes characteristic identification data for the information signal data. Therefore, it is possible to positively recognize the source information of the information signal data and positively discriminate the information signal data from other information signal data regardless of whichever recording medium the information signal data was recorded on and whether or not the information signal data has been transferred between different information recording mediums.

According to the data recording method of the third aspect of the present invention, in the data recording method according to the second aspect of the present invention, the characteristic identification data is code data indicative of an identification symbol to be given to the information signal data as a copyrighted material or code data indicative of an identification symbol to be given to a plurality of sets of information signal data as copyrighted materials. Therefore, in addition to the effect of the second aspect of the present invention, it is possible to positively protect copyrighted material or a plurality of information signal data as copyrighted materials with ease in terms of Copyright Act.

According to the data recording method of the fourth aspect of the present invention, in the data recording method according to the third aspect of the present invention, the identification symbol is formed of the nation identification symbol, the producer identification symbol, and the identification symbol for the information signal data. Therefore, in addition to the effect of the second aspect of the present invention, it is possible to positively protect copyrighted material or a plurality of information signal data as copyrighted materials with ease in terms of Copyright Act internationally and domestically.

According to the data recording method of the fifth aspect of the present invention, in the data recording method according to the second aspect of the present invention, the characteristic identification data is formed of code data indicative of an identification symbol and a track number of a recording medium on which the information signal data is recorded or a recording medium duplicated from the recording medium. Therefore, it is possible to positively recognize the source information of the information signal data and positively discriminate the information signal data from other information signal data regardless of whichever recording medium the information signal data was recorded on and whether or not the information signal data has been transferred between different information recording mediums.

According to the data recording method of the sixth aspect of the present invention, in the data recording method according to the second aspect of the present invention, the source information data further includes a characteristic identification data of other information signal data relating to that information signal data. Therefore, it is possible to positively recognize the source information of the information signal data, positively discriminate the information signal data from other information signal data, and positively search for other information signal data relating to that information signal data with ease, regardless of whichever recording medium the information signal data was recorded on and whether or not the information signal data has been transferred between different information recording mediums.

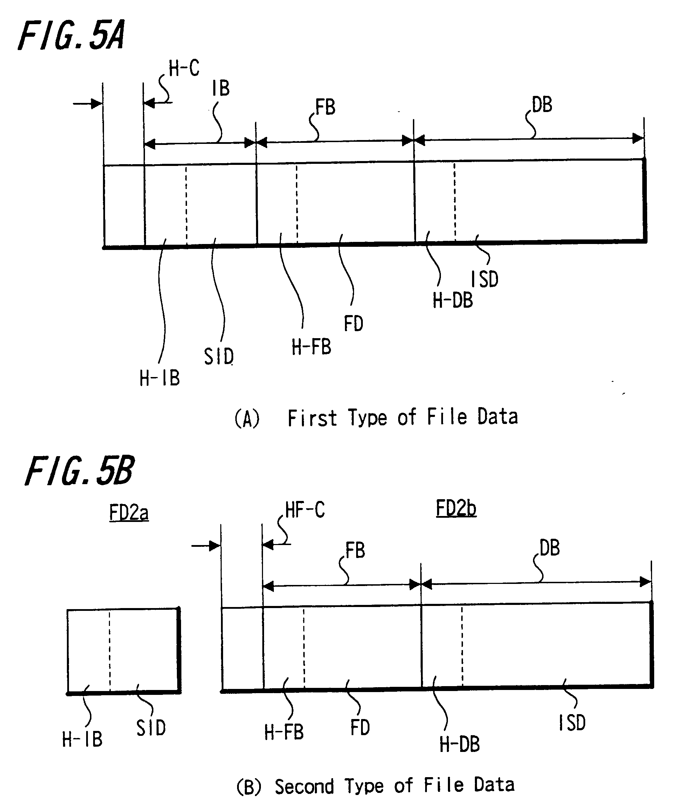

An embodiment of another aspect of the present invention will hereinafter be described with reference to FIGS. 5A and 5B, 6, 7 and 8A and 8B. According to the another aspect of the present invention, there is proposed a method for carrying out selective conversion between a first type of file data including source information data of information signal data, which makes it possible to recognize the origin of the information signal data, and a second type of file data including one file data portion with information signal data and the other file data portion with source information data of the information signal data provided separately from each other. According to the another aspect of the resent invention, a recording medium produced by the method is made more applicable to recording and/or reproducing systems.

Now, with reference to FIG. 5A, an arrangement of the first type of file data will be described. The first type of file data is recorded on recording mediums such as a magnetic tape, a magnetic disk, a fixed magnetic disk (hard disk), an optical disk, a magnetooptical disk and so on by the file data recording method according to the present invention.

An arrangement of the first type file data is fundamentally the same as that proposed in the above first aspect of the present invention. More specifically, the first type of file data is based on a common header H-C and a group of blocks as a frame fundamental unit, and the group of blocks includes at least an information block IB, a format block FB and a data block DB.

The data block DB is formed of the data block header H-DB and information signal data ISD. A name of block type indicative of the data block and a data size of the data block are written into the data block header H-DB. The information signal data ISD is any of the audio signal data, video signal data, program data and so on.

A name of block type indicative of the format block And a data size of the format block are written into the format block header H-FB. The format data FD includes data specification data of the information signal data such as sampling rate data, word length data per one sample, channel number data and so on.

The information block IB is formed of an information block header H-IB and source information data SID of the information signal data. A name of program type, or an information block name and a data size of the information block are written in the information block header H-IB. The source information data SID of the information signal data includes at least characteristic identification data of the information signal data ISD.

A name of file type indicative of an audio signal data file, video signal data file or a program data file, i.e., the audio signal data file, video signal data file or the program data file, and a data size of the entirety of the file are written into the common header H-C.

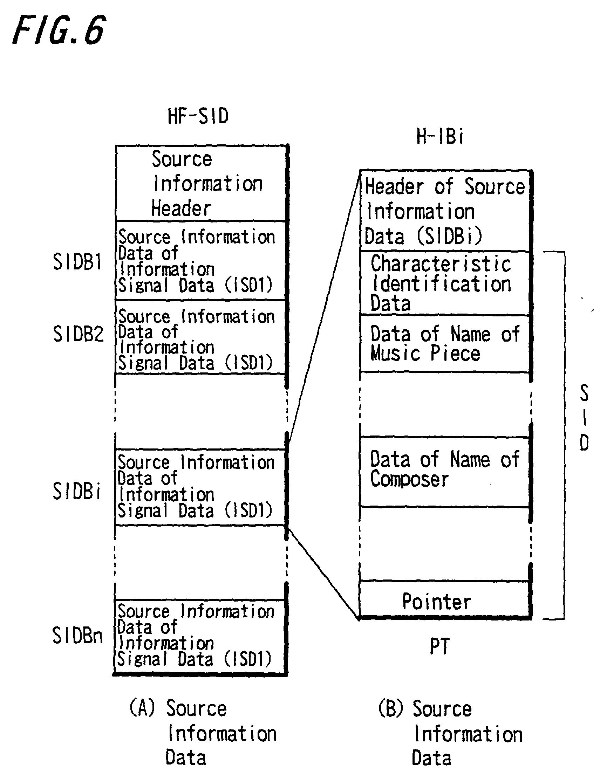

Now, an arrangement of the second type of file data according to the file data recording method of the present invention will be described with reference to FIG. 5B. The file data according to the present invention is recorded on a recording medium such as a magnetic tape, a magnetic disk, a fixed magnetic disk (hard disk), an optical disk, a magnetooptical disk or the like. In FIG. 5B, parts corresponding to those in FIG. 5A are attached with the same reference numerals. The second type of file data consists of a file data portion FD2b and a file data portion FD2a separated from each other. The file data portion FD2b is composed of fundamental frames of a common header HF-C, a format block FB and a data block DB, wherein the format block FB is formed of a format block header H-FB and format data FD, and the data block DB is formed of a data block header H-DB and information signal data ISD. The file data portion FD2a is composed of fundamental frames of an information block header H-IB and a source information data SID of the information signal data ISD including a pointer PT (see FIG. 6) indicative of a recording place on which the file data portion FD2b is recorded. The common header HF-C has a file type name indicative of audio signal data file and a data size of the entirety of the file written thereon.

Next, the source information data SID of the information signal data ISD of the information block IB in FIGS. 5A and 5B will further be described in detail. The source information data SID includes characteristic identification data of the information signal data ISD. As the characteristic identification data, for example, the followings may be employed.

### [Characteristic identification data]

1. Code data indicative of an identification symbol to be given to information signal data as a copyrighted material or code data indicative of an identification symbol to be given to a set of a plurality of information signal data as copyrighted materials. This identification symbol is formed of a numeral, alphabet, a combination of numeral and alphabet or the like.
2. The identification symbol of 1 is comprised of a nation identification symbol, a producer identification symbol, and an identification symbol of information signal data.
3. Code data indicative of an identification symbol and a track number of a recording medium on which information signal data is recorded or a recording medium duplicated from the recording medium.

In addition to the characteristic identification data of the information signal data ISD, the following can be employed as the source information data SID, for example.
1. Characteristic identification data of information signal data relating to the information signal data ISD of the data block DB. The characteristic identification data may be, for example, 1 to 3 or the like of the above characteristic identification data.
2. If the information signal data ISD is audio signal data, the following can be employed, for example.
   a) Code data indicative of a name of music piece or a title of the audio signal data or a general name of music piece or a general title of a plurality of audio signals including that audio signal data.
   b) Code data indicative of a name of one or a set of two or more of a composer, a songwriter, a conductor, a singer, a player, a producer, a seller or the like of the audio signal data.
   c) Text data (character data), still picture video signal data, moving picture video signal data, audio signal data and so on.
3. If the information signal data ISD is video signal data, for example, the following can be employed.
   a) Code data indicative of a title of the video signal data or a general title of a plurality of video signal data including the video signal data.
   b) Code data indicative of a name of one or a set of two or more of a director, a player, a composer, an original writer, a scenario writer, a producer, a seller or the like of the video signal data.
   c) Text data (character data), still picture video signal data, moving picture video signal data, audio signal data and so on.
4. If the information signal data ISD is program data, the following can be employed, for example.
   a) Code data indicative of a title of the program data or a general title of a plurality of program data including that program data.
   b) Code data indicative of a name of one or a set of two or more of a programmer, a designer, a composer, a producer, a seller or the like of the program data.

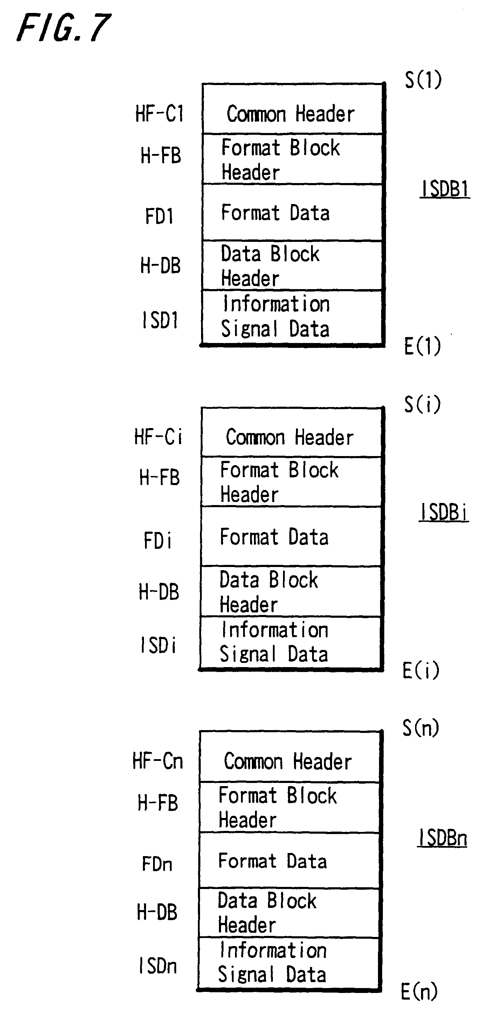

Next, how the second type of file data according to the file data recording method of the embodiment is recorded on a recording medium such as a magnetic tape, a magnetic disk, a fixed magnetic disk (hard disk), an optical disk, a magnetooptical disk or the like will be described with reference to FIG. 6 and FIG. 7. In FIG. 6 and FIG. 7, parts corresponding to those in FIGS. 5A and 5B are attached with the same reference numerals. It is allowable to convert not only a single but a plurality of the first type of file data shown in FIG. 5A into the second type of file data at a time. In correspondence to the number of pieces of the first type of file data subjected to the conversion, also it is allowable for the second type of file data shown in FIG. 5B to contain not only a single but a plurality of data pieces corresponding to the number of pieces of the first type of file data. FIGS. 6 and 7 show an arrangement of the second type of file data when a plurality of first type of file data are converted into the second type of file data at a time.

In FIG. 7, there are shown n pieces of information signal data ISDBl (of which the start address and the end address on the recording medium are set to S(1), E(1), respectively), ..., ISDB i (of which the start address and the end address on the recording medium are set to S(i), E(i), respectively), ..., ISDB n (of which the start address and the end address on the recording medium are set to S(n), E(n), respectively). These information signal data correspond to the file data portion FD2b shown in FIG. 5B. FIG. 6 illustrates in detail an arrangement of the file data portion FD2a of the second type file data in which the source information header HF-SID is followed by n pieces of source information data SIDB1, ..., SIDBi, ..., SIDBn that are provided so as to correspond to the n pieces of the information signal data ISDBl through ISDBn, respectively. The source information data SIDBi has a header H-IBi of the source information data SIDBi and source information data SID which is similar to the file data of the first type. In addition, it has an identification symbol (including an identification number) of the recording medium on which the information signal data ISDBi is recorded and a pointer PT indicative of an address, i.e., a start address S(i) and an end address E(i).

If the recording medium is a disk-shaped recording medium, a track number, a sector number, a frame, a time code or the like of the disk-shaped recording medium will play a role of an address. Conversely, if the recording medium is a magnetic tape, an absolute address number, a track number, a time code or the like of the recording medium will play a role of an address, i.e., the pointer.

Next, a manner of recording the above-described first and second types of file data will be described below in conjunction with cases where the information signal data are audio signal data and a video signal data, by way of an example of the computer (personal computer) of FIG. 4.

As shown in FIG. 5A, the first type of file data is composed of frame fundamental units of the common header H-C and blocks such as the information block IB, the format block FB, the data block DB or the like wherein the data block DB is formed of a data block header H-DB and audio signal data ISD, the format block FB is formed of a format block header H-IB, and format data FD, and the information block IB is formed of an information block header H-IB and source information data SID of audio signal data ISD. This first type of file data is recorded on any of a master magnetic tape, a master disk of an optical disk, a master disk of a magnetooptical disk or the like. Each of the master magnetic tape, the master disk of the optical disk, the master disk of the magnetooptical disk or the like is useful for duplicating magnetic tapes, optical disks, magnetooptical disks or the like in a mass producing manner. The file data recorded on the duplicated recording mediums are reproduced by the digital audio equipment 15A. Then, the reproduced data are supplied to any one of the hard disk drive apparatus 10, the streamer 11, the optical disk drive apparatus 12, the magnetooptical disk drive apparatus 13 or the like and recorded on a recording medium such as a hard disk, a magnetic tape for a streamer, an optical disk, a magnetooptical disk or the like.

Even if the information signal data is video signal data, the recording and reproducing process is similarly carried out as follows.

That is, the first type of file data shown in FIG. 5A is composed of the frame fundamental units of the common header H-C and blocks such as the information block IB, the format block FB, the data block DB or the like, wherein the data block DB is formed of the data block header H-DB and video signal data ISD, the format block FB is formed of the format block header H-FB and format data FD and the information block IB is formed of the information block header H-IB and the source information data SID of video signal data ISD. This first type of file data is recorded on any one of the master magnetic tape, the master disk of the optical disk, the master disk of the magnetooptical disk or the like. Each of the master magnetic tape, the master disk of the optical disk, the master disk of the magnetooptical disk or the like is useful for duplicating magnetic tapes, optical disks, magnetooptical disks or the like in a mass producing manner. The file data recorded on the duplicated recording mediums are reproduced by the digital video equipment 15V. Then, the reproduced data are supplied to any one of the hard disk drive apparatus 10, the streamer 11, the optical disk drive apparatus 12, the magnetooptical disk drive apparatus 13 or the like and recorded on a recording medium such as a hard disk, a magnetic tape for a streamer, a optical disk, a magnetooptical disk or the like. The video signal data may contain audio signal data.

The analog audio signal (analog video signal) recorded in the analog audio equipment 14A (analog video equipment 14V) may be subjected to A/D conversion by the I/O 4A for the analog audio signal, and then subjected to signal processing and electronic editing processing by the CPU 1. In this manner, conversion is made to produce file data which is composed of the frame fundamental units of the common header and the blocks such as the information block, the format block, the data block or the like, wherein the data block is formed of the data block header and audio signal data (video signal data), the format block is formed of the format block header and format data and the information block is formed of an information block header and source information data of the audio signal data (video signal data). Thus, the file data can be recorded in the digital audio equipment 15A (digital video equipment 15V).

As described above, according to the present invention, there are proposed two types of file data, i.e., the first type of file data and the second type of file data, so that they are interchangeably converted into each other. The following is description of a manner for converting the first type of file data and the second type of file data into each other.

Now, conversion of the first type of file data into the second type of file data will be described below. The first type of file data shown in FIG. 5A is recorded on the streamer by the streamer (streamer magnetic tape) drive apparatus 11, for example. Also in this case, the first type of file data is composed of the fundamental frames of the common header, the information block, the format block and the data block, wherein the information block is formed of the information block header and the source information data of the information signal data (audio signal data), the format block is formed of the format block header and the format data, and the data block is formed of the data block header and the information signal data (audio signal data).

Then, the first type of file data shown in FIG. 5A recorded on the streamer is reproduced by the streamer drive apparatus 11, and the CPU 1 carries out conversion to produce the second type of file data shown in FIG. 5B which consists of the first file data portion and the second file data portion. The first file data portion FD2b is composed of fundamental frames of a common header HF-C, a format block FB and a data block DB, wherein the format block FB is formed of a format block header H-FB and format data FD and the data block DB is formed of a data block header H-DB and the information signal data (audio signal data) ISD. The second file data portion FD2a is composed of fundamental frames of an information block header H-IB and source information data of the information signal data (audio signal data) SID including a pointer indicative of a recording place on which the first file data portion FD2b is recorded (this conversion is referred to as separation conversion). The converted file data is supplied through the storage bus 9 to the hard disk drive apparatus 10, for example, in which the converted file data is recorded on a hard disk.

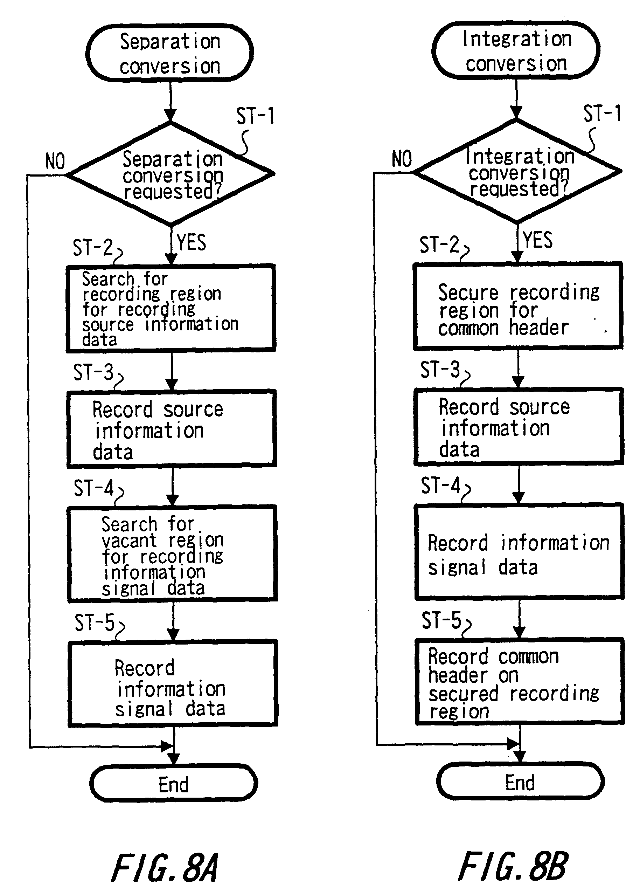

The above process of the separation conversion will be further described in more detail with reference to FIG. 8A. In this case, a vacant region of the hard disk is assigned by the CPU 1 as an address of the information signal data (audio signal data).

In step ST-1, it is determined whether a separation conversion is requested or not. If the result of determination is YES, then the processing proceeds to step ST-2 while if the result of determination is NO, the processing is ended. In step ST-2, searching is carried out for finding a region of the hard disk, i.e., a directory on which the source information data should be recorded. In step ST-3, the source information data is recorded on the directory. Next, in step ST-4, searching is made for finding a vacant region of the hard disk on which the information signal data (audio signal data) is to be recorded. In step ST-5, the information signal data (audio signal data) is recorded on the vacant region and the processing is ended.

Next, conversion of the second type of file data into the first type of file data will be described. The second type of file data shown in FIG. 5B is recorded on the hard disk by the hard disk drive apparatus 10. Also in this case, the second type of file data consists of the first file data portion and the second file data portion. The first file data portion is composed of the fundamental frames of the common header, the format block and the data block, wherein the format block is formed of the format block header and format data and the data block is formed of the data block header and the information signal data (audio signal data). The second file data portion is composed of the fundamental frames of the information block header and source information data of the information signal data (audio signal data) including the pointer indicative of the recording place on which the first file data portion is recorded.

Then, the second type of file data shown in FIG. 5B recorded on the hard disk is reproduced by the hard disk drive apparatus 10. The CPU 1 converts the second type of file data into the first type of file data composed of the fundamental frames of the common header, the information block, the format block and the data block, wherein the information block is formed of the information block header and the source information data of the information signal data (audio signal data), the format block is formed of the format block header and the format data, and the data block is formed of the data block header and the information signal data (audio signal data) (this conversion is hereinafter referred to as integration conversion). Then, the converted first type of file data is supplied through the storage bus 9 to the streamer (streamer magnetic tape) drive apparatus 11, for example, by which the first type of file data is recorded on the streamer.

The above operation to record the file data in the streamer will be described in more detail with reference to FIG. 8B.

In step ST-1, it is determined whether integration is requested or not. If the result of determination is NO, the processing is ended while if the result of determination is YES, then the processing proceeds to step ST-2. In step ST-2, a recording area of the streamer for the common header is secured. In step ST-3, the source information data is recorded on the streamer and in step ST-4, the information signal data (audio signal data) is recorded on the streamer. In step ST-5, the common header is recorded on the recording region for the common header which has been secured on the streamer, and the processing is ended.

While the separation conversion and the integration conversion described with reference to FIGS. 8A and 8B have been explained on the assumption that the information signal data is audio signal data, these conversions will be similarly carried out even if the information signal data contains video signal data or program data.

According to the twentieth aspect of the present invention, interactive conversion is selectively carried out between the first type of file data composed of the fundamental frames of the common header, the information block, the format block and the data block, wherein the information block is formed of the information block header and source information data of information signal data, the format block is formed of the format block header and format data, and the data block is formed of the data block header and the information signal data, and the second type of file data comprised of the file data portion composed of the fundamental frames of the common header, the format block and data block, wherein the format block is formed of the format block header and the format data, and the data block is formed of the data block header and the information signal data, and also comprised of the file data portion composed of the fundamental frames of the information block header and source information data of the information signal data including the pointer indicative of the recording place on which the first file data portion is recorded. Then, the first or second type of file data obtained by the interactive conversion is recorded on a recording medium. Therefore, there can be provided a file data recording method in which the interactive conversion is selectively carried out between the first type of file data which makes it possible to positively recognize the source information of the information signal data regardless of whichever recording medium the information signal data was recorded on and whether or not the information signal data has been transferred between different information recording mediums, and the second type of file data in which the source information data of the information signal data is provided separately from other data such as the format data and the information signal data, and then the selectively provided file data is recorded on a recording medium.

According to the twenty-first aspect of the present invention, in the file data recording method of the twentieth aspect of the invention, the source information data includes characteristic identification data for the information signal data. Therefore, according to the file data recording method of this aspect, interactive conversion can be selectively carried out between the file data which makes it possible to positively recognize the source information of the information signal data regardless of whichever recording medium the information signal data was recorded on and whether or not the information signal data has been transferred between different information recording mediums, and the file data in which the format data and the information signal data are separated from the source information data of the information signal data, and the data can be recorded on the recording medium. Further, the information signal data can be positively discriminated from other information signal data and recognized.

According to the twenty-second aspect of the present invention, in the file data recording method according to the twenty-first aspect of the present invention, the characteristic identification data is code data indicative of an identification symbol to be given to the information signal data as a copyrighted material or code data indicative of an identification symbol to be given to a set of information signal data as copyrighted materials. Therefore, in addition to the effect of the second aspect of the present invention, it is possible to provide a file data recording method in which the information signal data as a copyrighted material or a plurality of information signal data as copyrighted materials can be positively protected with ease in terms of Copyright Act.

According to the twenty-third aspect of the present invention, in the file data recording method according to the twenty-second aspect of the present invention, the identification symbol is formed of the nation identification symbol, the producer identification symbol, and the identification symbol for the information signal data. Therefore, in addition to the effect of the twenty-first aspect of the present invention, it is possible to provide a file data recording method in which the information signal data as a copyrighted material or a plurality of information signal data as copyrighted materials can be positively protected with ease in terms of Copyright Act internationally and domestically.

According to the twenty-fourth aspect of the present invention, in the file data recording method according to the twenty-first aspect of the present invention, the characteristic identification data is formed of code data indicative of an identification signal and a track number of a recording medium on which the information signal data is recorded or a recording medium duplicated from the recording medium. Therefore, it is possible to provide a file data recording method in which interactive conversion can be selectively carried out between the file data of information signal data which makes it possible to positively recognize the source information of the information signal data regardless of whichever recording medium the information signal data was recorded on and whether or not the information signal data has been transferred between different information recording mediums, and the file data of the information signal data in which the information signal data are separated from the relating information data such as the source information data of the information signal data, the format data or the like, and the data can be recorded on the recording medium. Further, the information signal data can be positively discriminated from other information signal data and recognized.

According to the twenty-fifth aspect of the present invention, in the file data recording method according to the twenty-first aspect of the present invention, the source information data further includes a characteristic identification data of other information signal data relating to that information signal data. Therefore, it is possible to provide data recording method, in which interactive conversion can be selectively carried out between the file data of information signal data which makes it possible to positively recognize the source information of the information signal data regardless of whichever recording medium the information signal data was recorded on and whether or not the information signal data has been transferred between different information recording mediums, and the file data of information signal data in which the information signal data are separated from relating information data such as the source information data of the information signal data, the format data or the like, and the data can be recorded on the recording medium. Further, the information signal data can be positively discriminated from other information signal data and recognized, and the searching for other information signal data relating to that information signal data can be positively carried out with ease.

Having described preferred embodiments of the invention with reference to the accompanying drawings, it is to be understood that the invention is not limited to that precise embodiment and that various changes and modifications could be effected therein by one skilled in the art without departing from the scope of the invention as defined in the appended claim.

## Claims

1. A data recording method of recording file data in frame fundamental units each having a common header and a group of blocks, on a recording medium, such that
said group of blocks includes at least an information block, a format block and a data block,
said data block is formed of a data block header and information signal data,
said format block is formed of a format block header and format data, and
said information block is formed of an information block header and source information data indicative of a source of said information signal data included in said data block.

2. A data recording method according to claim 1, wherein said source information data includes characteristic identification data for said information signal data.

3. A data recording method according to claim 2, wherein said characteristic identification data is code data indicative of an identification symbol to be given to said information signal data which is material protected by copyright or code data indicative of an identification symbol to be given to a plurality of sets of information signal data which are materials protected by copyright.

4. A data recording method according to claim 3, wherein said identification symbol is formed of a nation identification symbol, a producer identification symbol, and an identification symbol for said information signal data.

5. A data recording method according to any one of claims 2 to 4, wherein said characteristic identification data is formed of code data indicative of an identification symbol and a track number of a recording medium on which said information signal data is recorded or a recording medium duplicated from said recording medium.

6. A data recording method according to any one of claims 2 to 5, wherein said source information data further includes a characteristic identification data of other information signal data relating to said information signal data.

7. A data recording method according to any one of the preceding claims, wherein said information signal data is audio signal data.

8. A data recording method according to claim 7, wherein said source information data includes characteristic identification data of said audio signal data and code data indicative of a name of music piece of said audio signal data or a title of said audio signal data or a general name of music pieces or a general title of a plurality of audio signal data including said audio signal data.

9. A data recording method according to claim 8, wherein said source information data further includes code data indicative of a name of a composer, a songwriter, a conductor, a singer, a player, a producer or a seller of said audio signal data.

10. A data recording method according to any one of the preceding claims, wherein said information signal data is video signal data.

11. A data recording method according to claim 10, wherein said source information data includes characteristic identification data of said video signal data and code data indicative of a name of music piece or a title of said video signal data or a general name of music pieces or a general title of a plurality of video signal data including said video signal data.

12. A data recording method according to claim 11, wherein said source information data further includes code data indicative of a name of a director, a player, a composer, an original writer, a scenario writer, a producer or a seller of said video signal data.

13. A data recording method according to any one of the preceding claims, wherein said information signal data is program data.

14. A data recording method according to claim 13, wherein said source information data includes characteristic identification data of said program data and code data indicative of a title of said program data or a general title of a plurality of program data including said program data.

15. A data recording method according to claim 13 or 14, wherein said source information data further includes code data indicative of a name of a programmer, a designer, a composer, a producer or a seller of said program data.

16. A data recording method according to any one of the preceding claims, wherein said format data includes sampling rate data.

17. A data recording method according to any one of the preceding claims, wherein said format data includes sampling rate data and word length data per one sample data.

18. A date recording apparatus operable to record file data in frame fundamental units each having a common header and a group of blocks on a recording medium, wherein
said group of blocks includes at least an information block, a format block and a data block,
said data block is formed of a data block header and information signal data,
said format block is formed of a format block header and format data, and
said information block is formed of an information block header and source information data indicative of a source of said information signal data included in said data block.

19. A data recording medium on which there is recorded file data composed of frame fundamental units each having a common header and a group of blocks, wherein
said group of blocks includes at least an information block, a format block and a data block,
said data block is formed of a data block header and information signal data,
said format block is formed of a format block header and format data, and
said information block is formed of an information block header and source information data indicative of a source of said information signal data included in said data block.

20. A file data recording method in which interactive conversion is selectively carried out between:
a first type of file data composed of fundamental frames each having a common header, an information block, a format block and data block, wherein said information block is formed of an information block header and source information data of information signal data, said format block is formed of a format block header and format data, and said data block is formed of a data block header and said information signal data; and
a second type of file data comprising: a file data portion composed of fundamental frames each having a common header, a format block and data block, wherein said format block is formed of a format block header and format data and said data block is formed of a data block header and said information signal data; and a file portion composed of fundamental frames of an information signal data including a pointer indicative of a recording place for that file data portion,
wherein said first or second type of file data obtained by said interactive conversion is recorded on a recording medium.

21. A file data recording method according to claim 20, wherein said source information data includes characteristic identification data for said information signal data.

22. A file data recording method according to claim 21, wherein said characteristic identification data is code data indicative of an identification symbol to be given to said information signal data which is material protected by copyright or code data indicative of an identification symbol to be given to a set of information signal data which are materials protected by copyright.

23. A file data recording method according to claim 22, wherein said identification symbol is formed of a nation identification symbol, a producer identification symbol, and an identification symbol for said information signal data.

24. A file data recording method according to claim 21 or 22, wherein said characteristic identification data is formed of code data indicative of an identification symbol and a track number of a recording medium on which said information signal data is recorded or a recording medium duplicated from said recording medium.

25. A file data recording method according to any one of claims 21 to 24, wherein said source information data further includes a characteristic identification data of other information signal data relating to said information signal data.

26. A file data recording method according to any one of claims 20 to 25, wherein said information signal data is audio signal data.

27. A file data recording method according to claim 26, wherein said source information data includes characteristic identification data of said audio signal data and code data indicative of a name of music piece or a title of said audio signal data or a general name of music pieces or a general title of a plurality of audio signals including said audio signal data.

28. A file data recording method according to claim 27, wherein said source information data further includes code data indicative of a name of a composer, a songwriter, a conductor, a singer, a player, a producer or a seller of said audio signal data.

29. A file data recording method according to any one of claims 20 to 28, wherein said information signal data is video signal data.

30. A file data recording method according to claim 29, wherein said source information data includes characteristic identification data of said video data and code data indicative of a name of music pieces or a title of said video signal data or a general name of music piece or a general title of a plurality of video signal data including said video signal data.

31. A file data recording method according to claim 30, wherein said source information data further includes code data indicative of a name of a director, a player, a composer, an original writer, a scenario writer, a producer or a seller of said video signal data.

32. A file data recording method according to any one claims 20 to 31, wherein said information signal data is program data.

33. A file data recording method according to claim 32, wherein said source information data includes characteristic identification data of said program data and code data indicative of a title of said program data or a general title of a plurality of program data including said program data.

34. A file data recording method according to claim 32 or 33, wherein said source information data further includes code data indicative of a name of a programmer, a designer, a composer, a producer or a seller of said program data.

35. A file data recording method according to any one of claims 20 to 34, wherein said pointer indicative of the recording place of said file data portion indicates an identification symbol and an address of said recording medium.

36. A file data recording method according to any one of claims 20 to 35, wherein said format data includes sampling rate data.

37. A file data recording method according to any one of claims 20 to 36, wherein said format data includes sampling rate data and word length data per one sample data.
